# EUROPEAN PATENT SPECIFICATION

(11) **EP 3 273 526 B1**
(45) Date of publication and mention of the grant of the patent: **02.09.2020**
(21) Application number: 16765051.4
(22) Date of filing: 17.03.2016
(51) Int. Cl.: H01M 10/6553, H01G 11/12, H01G 11/18, H01M 2/10, H01M 2/20, H01M 10/613, H01M 10/617, H01M 10/647, H01M 10/6551, H01M 10/6569, H01M 2/02, H01M 10/6567, H01M 10/6552

(54) **ELECTRICAL STORAGE MODULE**
ELEKTRISCHES SPEICHERMODUL
MODULE DE STOCKAGE ÉLECTRIQUE

(30) Priority: 19.03.2015 JP 2015055920
(43) Date of publication of application: 24.01.2018
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: KUBOKI Hideyuki, Yokkaichi-shi Mie 510-8503 (JP); HIRAI Hiroki, Yokkaichi-shi Mie 510-8503 (JP); HIGASHIKOZONO Makoto, Yokkaichi-shi Mie 510-8503 (JP)
(74) Representative: Fédit-Loriot
(86) International application number: PCT/JP2016/058438
(87) International publication number: WO 2016/148222

(56) References cited:
- WO-A1-02/27816
- JP-A- 2004 071 178
- JP-A- 2010 211 963
- JP-A- 2010 211 963
- JP-A- 2014 203 564
- US-A- 6 010 800
- US-A1- 2013 045 409
- US-A1- 2013 120 910
- US-A1- 2013 280 574
- US-A1- 2014 242 426
- US-A1- 2014 342 201
- US-A1- 2014 356 660

## Description

### Technical Field

The present invention relates to an electricity storage module including a plurality of electricity storage elements.

### Background Art

An electricity storage device disclosed in Patent Document 1 is known as a conventional electricity storage device. This electricity storage device includes a plurality of electricity storage elements, a case that accommodates the plurality of electricity storage elements, and absorption sheets that are in contact with the outer surfaces of the electricity storage elements and have absorbed a coolant.

In this electricity storage device, heat generated in the electricity storage elements during charge/discharge is transferred from the outer surfaces of the electricity storage elements to the absorption sheets. When the heat is transferred to the coolant absorbed by the absorption sheets, the coolant is evaporated. At this time, the heat generated in the electricity storage elements is absorbed as evaporation heat of the coolant. The evaporated coolant moves to the upper space in the case, and transfers the heat to a top panel of the case at the inner surface of the top panel. The vapor of the coolant is devolatilized due to a decrease in temperature. The devolatilized coolant falls inside the case due to gravity, and accumulates at the bottom of the case. The coolant accumulating at the bottom of the case is absorbed by the absorption sheets and rises, and then absorbs the heat of the electricity storage elements again.

### Citation List

### Patent Documents

Patent Document 1: JP 2010-211963A discloses a battery module, comprising a housing filled with a coolant, and an absorption sheet that absorbs the coolant and is in contact with an outer surface of a battery unit.

US 2013/280574 A1 discloses a battery pack that includes a cooling pipe covering and thereby cooling electrode terminals of the neighbouring battery cells.

US 2013/045409 A1 discloses a battery module comprising cooling elements that cover terminals of each adjacent cell.

### Summary of Invention

### Technical Problem

However, with the above-mentioned technique, the absorption sheets are not in contact with connection portions where electrodes of the plurality of electricity storage elements are electrically connected. A relatively large electric current flows through the connection portions. Moreover, since the connection portions have cross sections that are smaller than those of the electricity storage element bodies, their electric resistance is relatively large, and thus they tend to generate heat. Therefore, when the plurality of electricity storage elements are charged/discharged, there is a concern that the connection portions generate heat, and temperature rises locally.

The present invention was accomplished based on the aforementioned circumstances, and it is an object thereof to suppress a local increase in temperatures of the connection portions where a plurality of electricity storage elements are electrically connected.

### Solution to Problem

An electricity storage module according to the present invention includes a housing filled with a coolant, a plurality of electricity storage elements that include electrode terminals located above a liquid surface of the coolant and that are accommodated in the housing, and a plurality of absorption sheets that absorb the coolant and is are contact with an outer surface of at least one of the plurality of electricity storage elements, wherein the electrode terminals include connection portions that electrically connect the electrode terminals of the adjacent electricity storage elements of the plurality of electricity storage elements and that are integral with or separate from the electrode terminals, and each of the plurality of absorption sheets includes a contact portion that is in contact with the connection portion; characterized in that the contact portions are placed one on top of the other and arranged on the connection portion.

With the above configuration, heat generated in the electricity storage elements that are in contact with the absorption sheet is transferred to the coolant absorbed by the absorption sheet, and the coolant is evaporated due to this heat. As a result, heat generated in the electricity storage elements is absorbed as evaporation heat of the coolant. Moreover, heat generated in the connection portions is transferred to the coolant that has reached the contact portion of the absorption sheet, and the coolant is evaporated due to this heat. As a result, heat generated in the connection portions is absorbed as evaporation heat of the coolant.

An electric current that flows through the electricity storage elements flows through the connection portions where the electrode terminals are connected to each other. However, the connection portions have cross sections that are smaller than those of the electricity storage elements. Therefore, the connection portions relatively tend to generate heat, and temperature is likely to rise locally. In this embodiment, the contact portion is configured to come into contact with the connection portion, and therefore, the contact portion can be reliably cooled by the coolant absorbed up to the contact portion. As a result, a local increase in temperature of the connection portion can be suppressed.

The following embodiments are preferred as embodiments of the present invention.

It is preferable that the contact portion is in contact with the connection portion from a side opposite to the electricity storage elements.

With the above configuration, the contact portion is configured to be placed on the connection portion from above. On the other hand, the electricity storage elements are arranged at positions below the connection portions. With such a configuration, when the contact portion is brought into contact with the connection portion, interference between the electricity storage element and the contact portion can be prevented. As a result, a step of bringing the contact portion into contact with the connection portion can be simplified.

Moreover, it is preferable that the housing includes a case provided with an opening that opens upward, and a lid portion that has a shape following an opening edge of the opening of the case and that closes the opening, and the lid portion includes a heat dissipation fin projecting outward from the housing, and a heat absorption fin projecting inward into the housing.

After the coolant absorbs heat generated in the electricity storage elements and the connection portions and is thus evaporated, the coolant rises inside the housing and is in contact with the heat absorption fin that is formed on the lower side of the lid portion. Then, heat is transferred from the vapor of the coolant to the heat absorption fin. Heat transferred to the heat absorption fin is transmitted to the heat dissipation fin, and then dissipated from the heat dissipation fin to the outside. Accordingly, heat absorbed by the coolant is efficiently dissipated to the outside of the housing, and therefore, a local increase in temperatures of the electricity storage elements is further suppressed.

It is preferable that the heat absorption fin is arranged above the connection portions.

With the above configuration, when the vapor of the coolant comes into contact with the heat absorption fin, heat of the vapor of the coolant is transferred to the heat absorption fin. Then, the coolant is condensed into a liquid form. The devolatilized coolant falls downward from the cooling fin due to gravity. With this embodiment, the cooling fin is arranged above the connection portions, and therefore, the coolant that has fallen from the cooling fin reliably flows down on the connection portions. As a result, the devolatilized coolant first cools the connection portions, and therefore, a local increase in temperatures of the connection portions is further suppressed.

### Advantageous Effects of Invention

With the present invention, a local increase in temperatures of the connection portions where a plurality of electricity storage elements are electrically connected can be suppressed.

### Brief Description of Drawings

FIG. 1 is a perspective view of an electricity storage module according to Embodiment 1.
FIG. 2 is a plan view of the electricity storage module.
FIG. 3 is a right side view of the electricity storage module in which a case is omitted.
FIG. 4 is a front view of the electricity storage module in which a case is omitted.
FIG. 5 is a perspective view showing a state in which a plurality of electricity storage elements are connected in series.
FIG. 6 is a cross-sectional view taken along line VIVI in FIG. 3.
FIG. 7 is a right side view of an absorption sheet.
FIG. 8 is a perspective view of the absorption sheet.
FIG. 9 is an enlarged view of a circle 40 in FIG. 6.
FIG. 10 is a perspective view of a separator.
FIG. 11 is a plan view of the separator.
FIG. 12 is a perspective view showing a state in which the separators and the absorption sheets are lined up and assembled to a wiring member, and then the contact portions are fixed to the connection portions.
FIG. 13 is a perspective view showing a state in which the electricity storage elements, the separators, and the absorption sheets are lined up.
FIG. 14 is a perspective view showing a state in which the electricity storage elements, the separators, and the absorption sheets are lined up and assembled to the wiring member.

### Description of Embodiments

### Embodiment 1

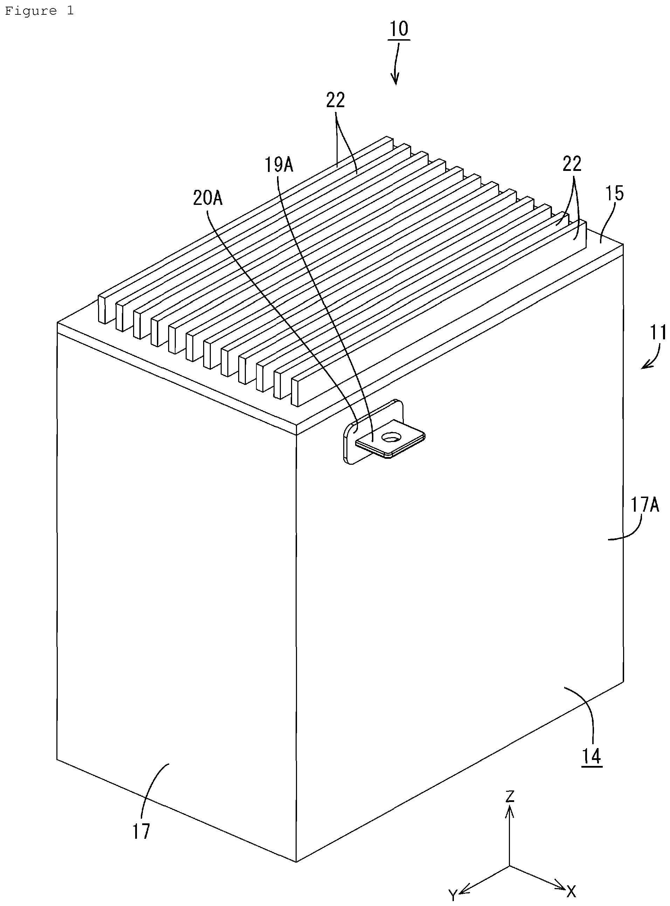

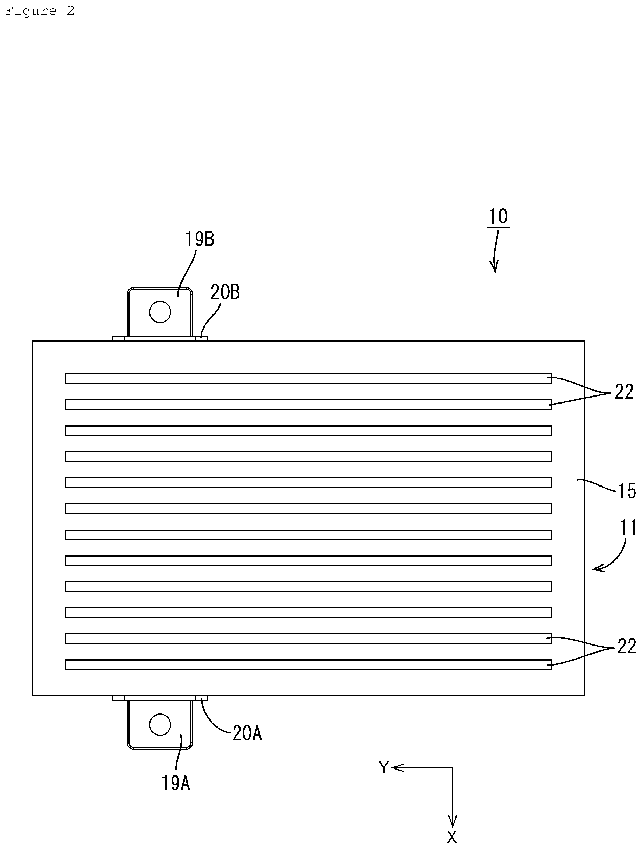

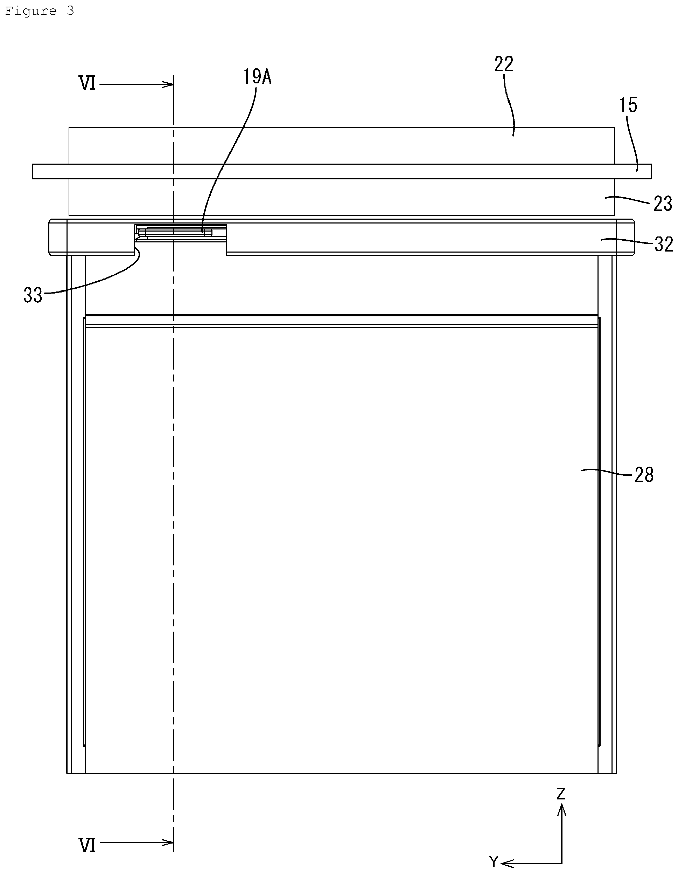

Embodiment 1 of the present invention will be described with reference to FIGS. 1 to 14. An electricity storage module 10 according to this embodiment includes a housing 11, and a plurality of electricity storage elements 12 that are accommodated in the housing 11. In the following description, the X direction indicates a "right side", the Y direction indicates a "front side", and the Z direction indicates an "upper side". Moreover, where a plurality of members have the same shape, only some of the members may be denoted by reference numerals, and the other members may not be denoted by reference numerals.

### Housing 11

As shown in FIGS. 1 to 4, the housing 11 of the electricity storage module 10 has a substantially rectangular parallelepiped shape as a whole. The housing 11 includes a case 14 provided with an opening 13 that opens upward, and a lid portion 15 that closes the opening 13 of the case 14. The case 14 includes a bottom wall 16 having a substantially rectangular shape, and side walls 17 that rise upward from the side edges of the bottom wall 16. The upper ends of the side walls 17 are taken as an opening edge 18 of the opening 13.

The case 14 is made of metal such as aluminum or stainless steel, and can be made of any metal as necessary. A power terminal 19A of the electricity storage module 10 is provided via a grommet 20A made of an insulating material (e.g., synthetic resin) at a position that is located near the upper end and front end of a right side wall 17A of the case 14. The grommet 20A achieves liquid tightness between the power terminal 19A and the right side wall 17A of the case 14. Moreover, a power terminal 19B of the electricity storage module 10 is provided via a grommet 20B made of an insulating material (e.g., synthetic resin) at a position that is located near the upper end and front end of a left side wall 17B of the case 14. The grommet 20B achieves liquid tightness between the power terminal 19B and the left side wall 17B of the case 14.

The lid portion 15 is made of metal such as aluminum or stainless steel, and can be made of any metal as necessary. The lid portion 15 has a substantially rectangular shape as viewed from above, following the shape of the opening 13. A gap between the lid portion 15 and the upper ends of the side walls 17 of the case 14 is sealed in a liquid-tight manner using a known method such as welding, soldering, or brazing. As a result, a coolant 21 that has been placed in the housing 11 is sealed in the housing 11. A configuration may also be applied in which a gap between the lid portion 15 and the upper ends of the side walls 17 of the case 14 is sealed via a packing (not shown) in a liquid-tight manner using a known method such as bolting.

Insulating liquid can be used as the coolant 21, and examples thereof include perfluorocarbon, hydrofluoroether, hydrofluoroketone, and fluorine inert liquid.

A plurality of (twelve in this embodiment) heat dissipation fins 22 that project upward and extend in a front-rear direction are formed with a constant pitch on the top surface of the lid portion 15. In addition, a plurality of (twelve in this embodiment) heat absorption fins 23 that project downward and extend in a front-rear direction are formed with a constant pitch on the lower surface of the lid portion 15. In this embodiment, the pitch between the heat dissipation fins 22 and the pitch between the heat absorption fins 23 are set to the same value, and the heat dissipation fins 22 and the heat absorption fins 23 are formed at corresponding positions on both sides of lid portion 15 in the vertical direction. The lid portion 15 may be formed through extrusion molding or die casting.

### Electricity storage element 12

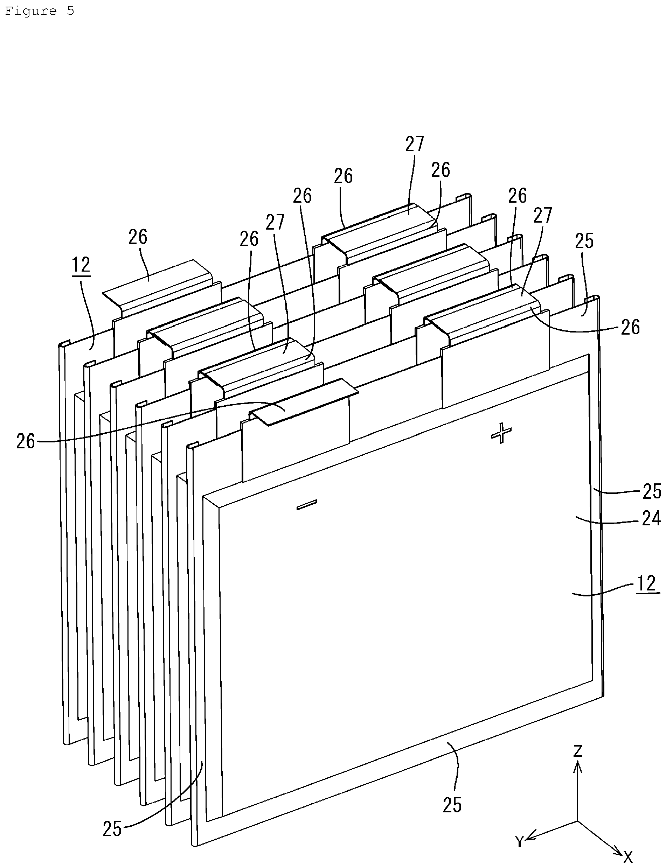

As shown in FIG. 5, the electricity storage element 12 is obtained by sandwiching an electricity storage constituent (not shown) between a pair of laminated sheets 24 having a substantially rectangular shape, and joining the side edges of the pair of laminated sheets 24 in a liquid-tight manner using a known method such as welding. Joined portions 25 projecting outward are formed at the upper edge, lower edge, front end edge, and rear end edge of the laminated sheets 24. A pair of electrode terminals 26 that is electrically connected to the electricity storage constituent projects upward from the upper end edge of the laminated sheet 24. The pair of electrode terminals 26 is made of a metal foil. The pair of electrode terminals 26 includes a positive electrode and a negative electrode. A gap between the pair of electrode terminals 26 and the inner surfaces at the upper end edges of the laminated sheets 24 are sealed in a liquid-tight manner.

In this embodiment, a secondary battery such as a lithium-ion secondary battery or a nickel-metal hydride secondary battery may be used as the electricity storage element 12, for example, and a capacitor such as an electric double layer capacitor or a lithium-ion capacitor may be used as the electricity storage element 12. In this manner, regarding the electricity storage element 12, any electricity storage element 12 can be selected as necessary.

The electricity storage element 12 has a substantially rectangular flat shape as viewed in the left-right direction. A plurality of (six in this embodiment) electricity storage elements 12 are lined up in the left-right direction such that the polarities of the adjacent electrode terminals 26 are different.

The electrode terminals 26 to be electrically connected, out of the electrode terminals 26 of adjacent electricity storage elements 12, are bent in directions in which they come closer to each other, and placed one on top of the other in the vertical direction, and then, in this state, they are electrically connected using a known method such as laser-welding, soldering, or brazing.

As shown in FIG. 5, the electrode terminal 26 on the rear side of the electricity storage element 12 located furthest to the right is bent toward the left at a substantially right angle. Moreover, the electrode terminal 26 on the rear side of the electricity storage element 12 located at the second position from the right is bent toward the right at a substantially right angle. In this embodiment, the electrode terminals 26 bent in a direction in which they come closer to each other are welded through laser-welding in a state in which they are placed one on top of the other. As a result, the electricity storage element 12 located furthest to the right and the electricity storage element 12 located at the second position from the right are connected in series. Other electricity storage elements 12 are connected to one another in a similar manner, and thus the plurality of electricity storage elements 12 are connected in series.

A portion in which the electrode terminals 26 of the adjacent electricity storage elements 12 are connected to each other is taken as a connection portion 27. In this embodiment, the connection portion 27 is formed by welding the electrode terminals 26, and therefore, the connection portion 27 is integral with the electrode terminals 26. It should be noted that the connection portion 27 may also have a configuration in which the electrode terminals 26 of the adjacent electricity storage elements 12 are electrically connected using a conductive member (e.g., busbar) that is a member separate from the electrode terminals 26.

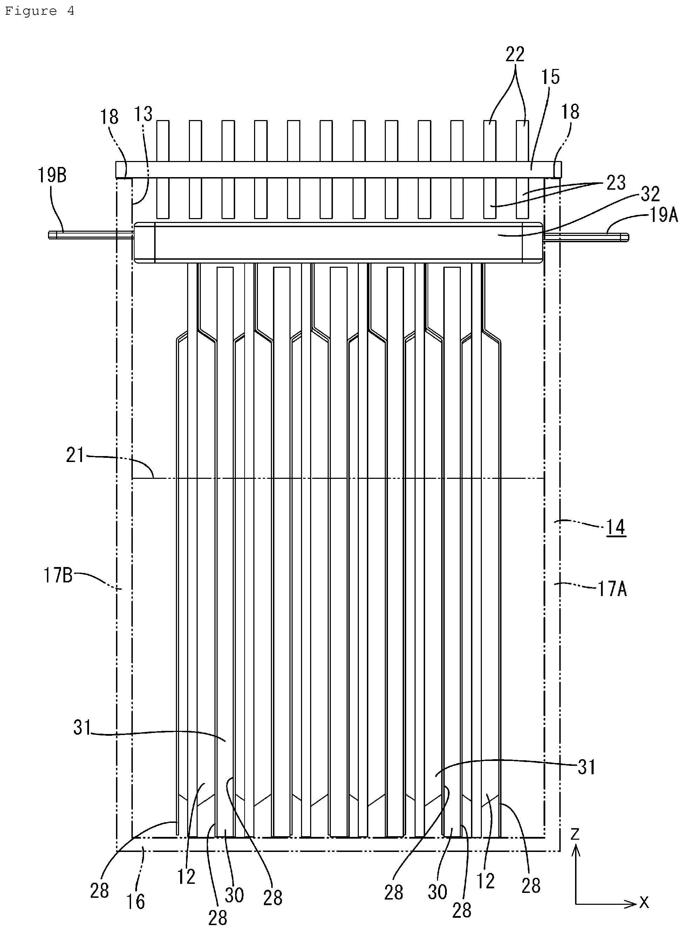

As shown in FIG. 4, in a state in which the plurality of electricity storage elements 12 is accommodated in the case 14, and the lid portion 15 is fixed to the case 14, the electrode terminals 26 of the electricity storage elements 12 are located above the liquid surface of the coolant 21. The liquid surface of the coolant 21 can be set at any position in the case 14.

### Absorption sheet 28

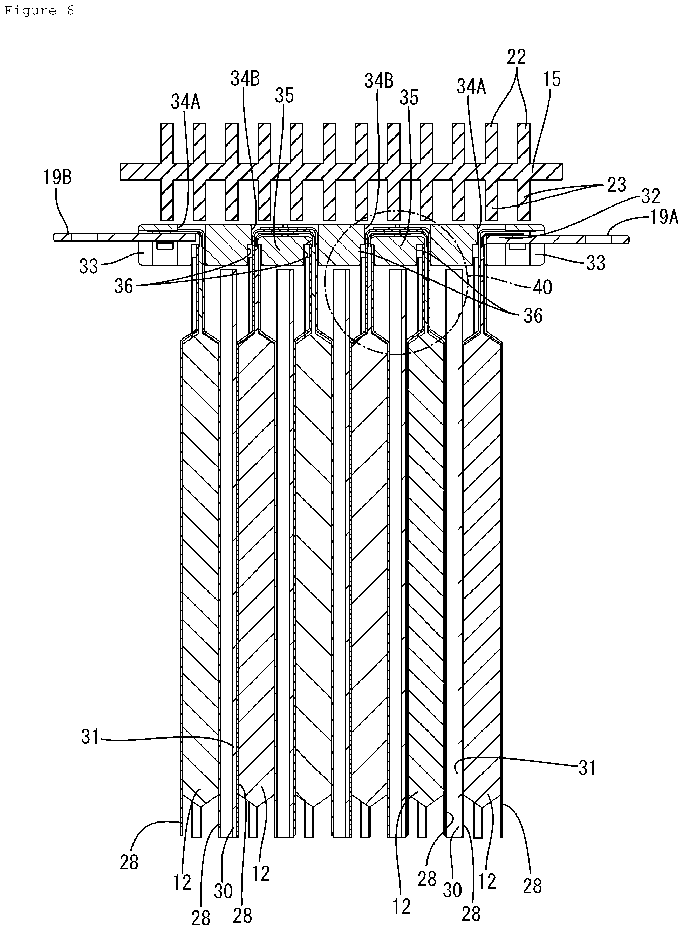

As shown in FIG. 6, an absorption sheet 28 is arranged on at least one of the left and right lateral surfaces of the electricity storage element 12 and is in contact with the outer surface of the electricity storage element 12. In this embodiment, the absorption sheet 28 is arranged on the left lateral surface of the electricity storage element 12 and is in contact therewith, and the absorption sheet 28 is also arranged on the right lateral surface of the electricity storage element 12 and is in contact therewith. The absorption sheet 28 is made of a material that can absorb the coolant 21. The absorption sheet 28 may be a fabric or a non-woven fabric made of a product obtained by processing a material that can absorb the coolant 21 into a fibrous form. The non-woven fabric may be in the form of a fiber sheet, a web (thin film-like sheet constituted by only fibers), or a batt (blanket-like fiber). A material constituting the absorption sheet 28 may be a natural fiber, a synthetic fiber made of a synthetic resin, or a material using both a natural fiber and a synthetic fiber.

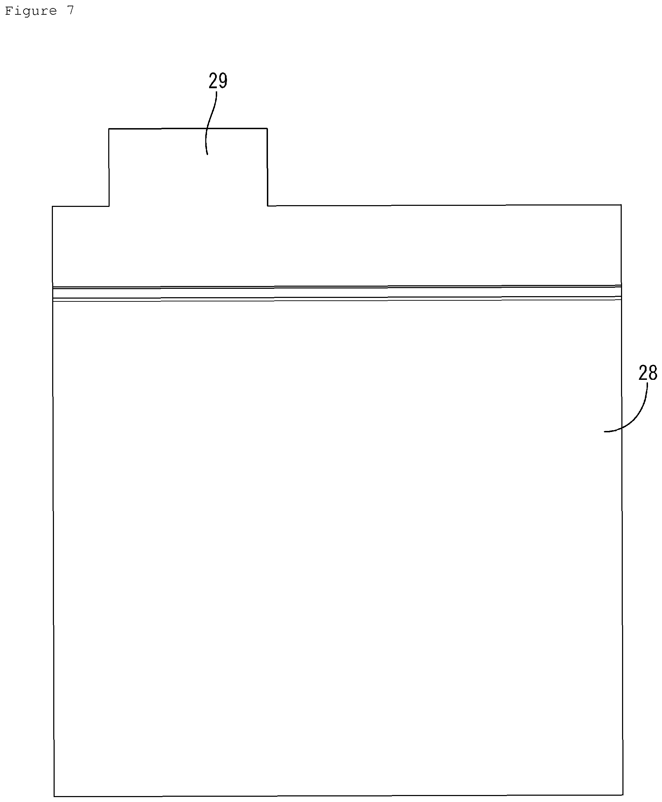

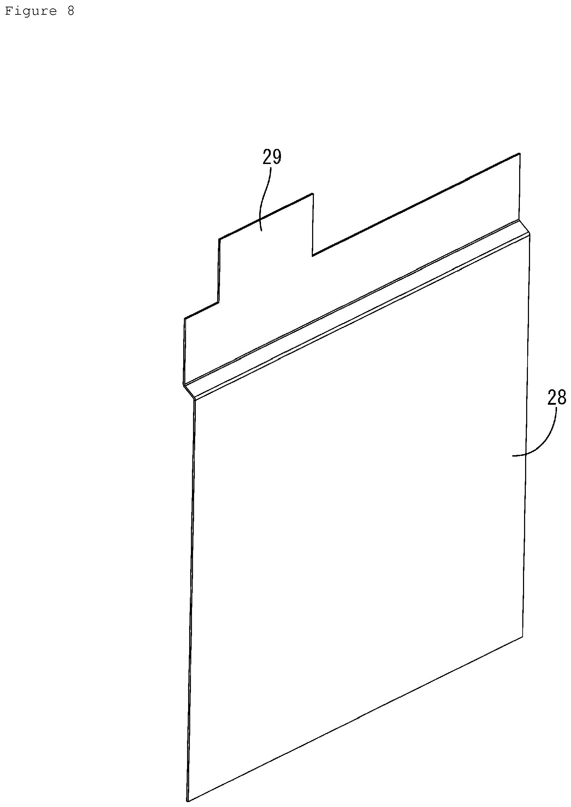

As shown in FIGS. 7 and 8, the absorption sheet has a substantially rectangular shape as viewed in the left-right direction. The size of the absorption sheet 28 may be such that the absorption sheet 28 comes into contact with one lateral surface (at least one of the left and right lateral surfaces of the electricity storage element 12 in this embodiment) of the electricity storage element 12. It is preferable that the size of the absorption sheet 28 is substantially the same as that of at least one of the left and right lateral surfaces of the electricity storage element 12. It is more preferable that the size of the absorption sheet 28 is larger than that of at least one of the left and right lateral surfaces of the electricity storage element 12. In this embodiment, the absorption sheet 28 is formed to have a size that is substantially the same as those of the left and right lateral surfaces of the electricity storage element 12.

A contact portion 29 projecting upward is formed at at least one end in the front-rear direction of the upper end edge of the absorption sheet 28. The contact portion 29 is formed in a substantially rectangular shape as viewed in the left-right direction. The contact portion 29 is placed on the connection portion 27 in which the electrode terminals 26 of the adjacent electricity storage elements 12 are connected, and is in contact with this connection portion 27. In this embodiment, the contact portion 29 is placed, from above, on the connection portion 27 formed through laser-welding of the electrode terminals 26 of the adjacent electricity storage elements 12 placed one on top of the other, and is in contact therewith.

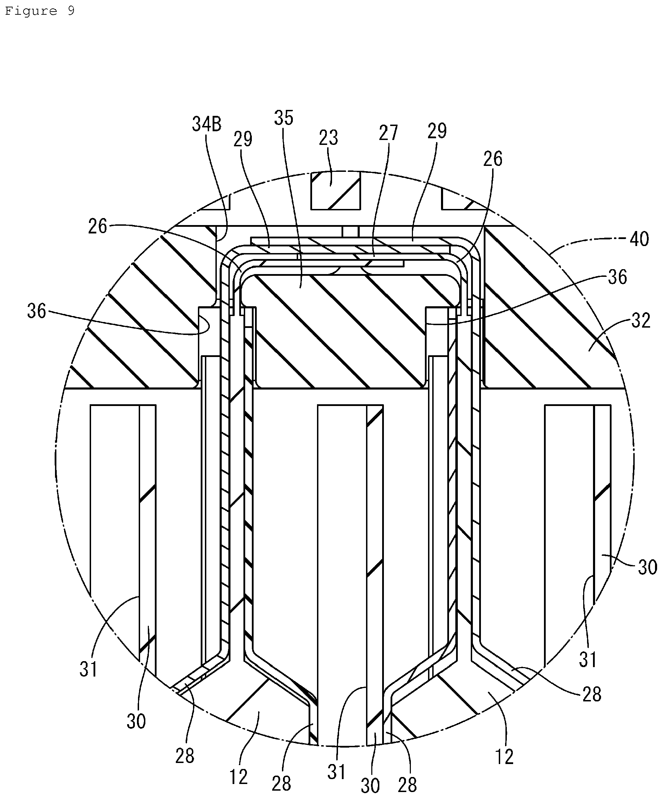

FIG. 9 is an enlarged view of a structure in a circle 40 in FIG. 6. As shown in FIG. 9, two contact portions 29 are placed one on top of the other and arranged on one connection portion 27.

### Separator 30

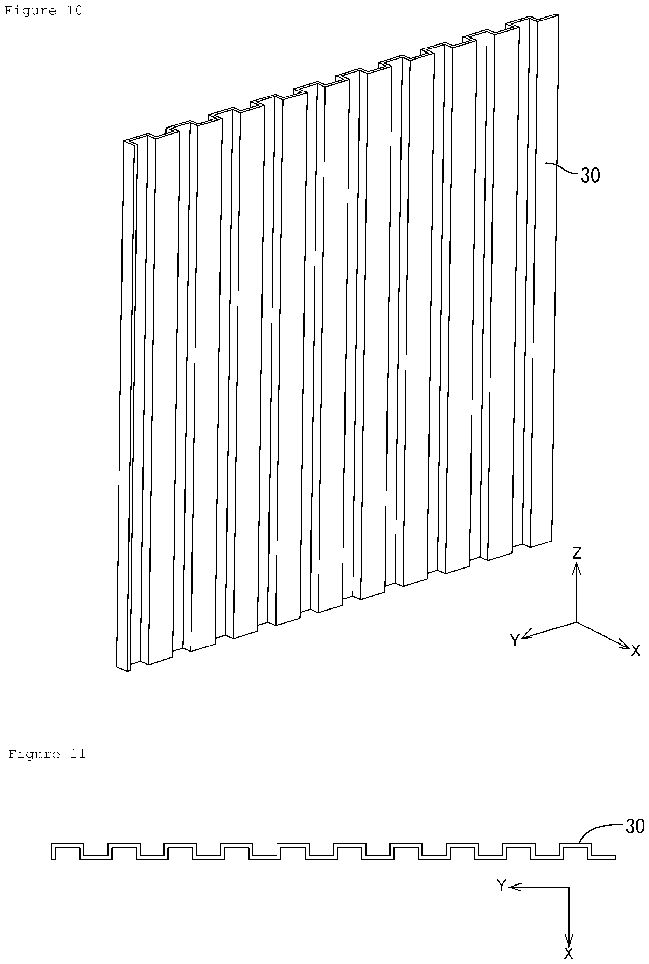

As shown in FIG. 6, a plurality of (five in this embodiment) separators 30 are arranged between the plurality of electricity storage elements 12. As shown in FIGS. 10 and 11, each separator 30 is obtained by forming a plurality of recesses and protrusions extending in the vertical direction on both surfaces of a plate material having a substantially rectangular shape.

As shown in FIG. 6, the recesses and protrusions formed on both of the left and right lateral surfaces of the separator 30 are vertically continuous. The separators 30 are arranged between the plurality of electricity storage elements 12 in such an orientation that the recesses and protrusions extend in the vertical direction. As a result, in the state in which the separators 30 are arranged between the plurality of electricity storage elements 12, the recesses and protrusions located between the separator 30 and the absorption sheet 28 serve as airways 31 through which the vapor of the coolant 21 flows in the vertical direction.

### Wiring member 32

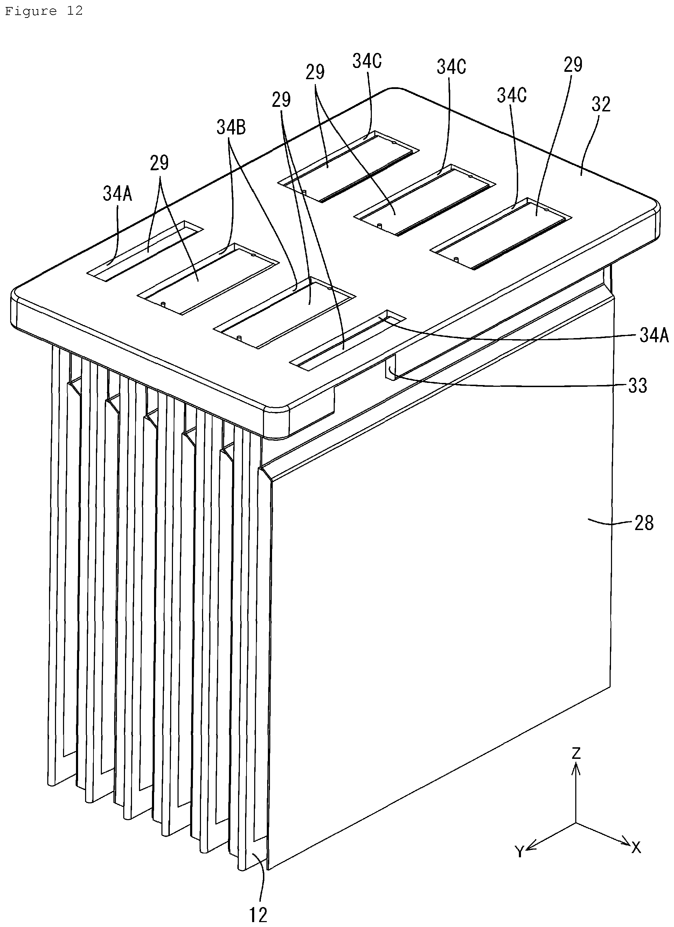

As shown in FIG. 12, a wiring member 32 made of an insulating synthetic resin is provided above the plurality of electricity storage elements 12. The wiring member 32 has a plate shape that is thick in the vertical direction. The wiring member 32 has a substantially rectangular shape as viewed from above, and is formed to be slightly smaller than the lid portion 15.

As shown in FIGS. 6 and 12, recesses 33 into which the power terminals 19A and 19B of the electricity storage module 10 are to be respectively inserted are formed near the front end of both of the left and right lateral edges of the wiring member 32. The electrode terminals 26 of the electricity storage elements 12 arranged at both ends in the left-right direction are placed on the power terminals 19A and 19B of the electricity storage module 10. The power terminals 19A and 19B are electrically connected to the electrode terminals 26 using a known method such as welding, soldering, or brazing.

Two window rows in which a plurality of windows 34A, 34B and 34C are lined up with intervals in the left-right direction are formed, spaced apart in the front-rear direction, in the top surface of the wiring member 32. A front window row located on the front side includes two windows 34A located at the left and right, and two windows 34B located near the center in the left-right direction. The two windows 34A located at the left and right are formed such that its width dimensions in the left-right direction are smaller than those of the two windows 34B located near the center in the left-right direction.

A rear window row located on the rear side, out of the window rows, includes three windows 34C. The windows 34C included in the rear window row all have the same size.

The contact portions 29 placed on the connection portions 27 of the electrode terminals 26 are exposed through the two windows 34B located near the center in the left-right direction in the front window row and the three windows 34C included in the rear window row. Moreover, the contact portions 29, which are placed on the electrode terminals 26 placed on the power terminals 19A and 19B, are exposed through the two windows 34A located at both ends in the left-right direction in the front window row.

As shown in FIG. 6, in the state in which the plurality of electricity storage elements 12 are accommodated in the case 14, and the lid portion 15 is fixed to the case 14, the heat absorption fins 23 are located above the contact portions 29 exposed through the windows 34A, 34B, and 34C.

Base portions 35 on which the electrode terminals 26 that have been placed one on top of the other are to be mounted are formed below the two windows 34B located near the center in the left-right direction in the front window row and the three windows 34C included in the rear window row. The base portions 35 are coupled to the inner lateral surfaces in the front-rear direction of the windows 34B and 34C, which are not specifically shown in the drawings.

In the lower surface of the wiring member 32, slits 36 that are vertically in communication with the windows 34B and 34C are formed on the lateral sides in the left-right direction of the base portions 35. The electrode terminals 26 and the contact portions 29 of the absorption sheets 28 are inserted through the slits 36 from below.

### Example of process for manufacturing embodiment

Next, an example of a process for manufacturing this embodiment will be described. It should be noted that the process for manufacturing this embodiment is not limited to the following description.

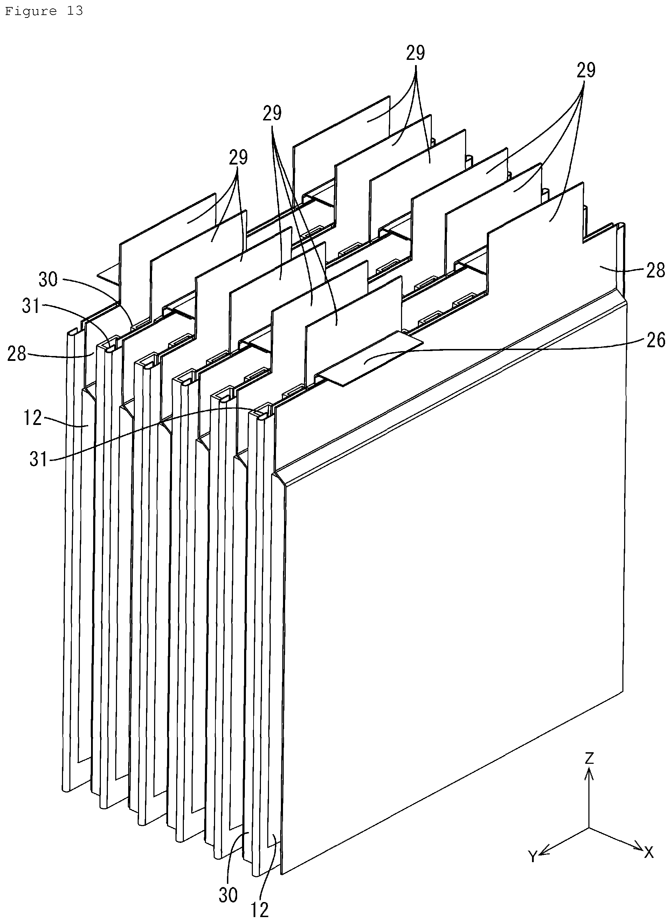

As shown in FIG. 13, the plurality of electricity storage elements 12, the plurality of absorption sheets 28, and the plurality of separators 30 are stacked and lined up in the left-right direction. More specifically, absorption sheets 28 are placed on each of the left and right surfaces of one electricity storage element 12. Six electricity storage elements 12 on which the absorption sheets 28 are placed on the left and right surfaces are produced. Five separators 30 are respectively arranged between the six electricity storage elements 12. In this state, the electrode terminals 26 that have been vertically placed one on top of the other are laser-welded. As a result, the connection portions 27 are formed on the electrode terminals 26.

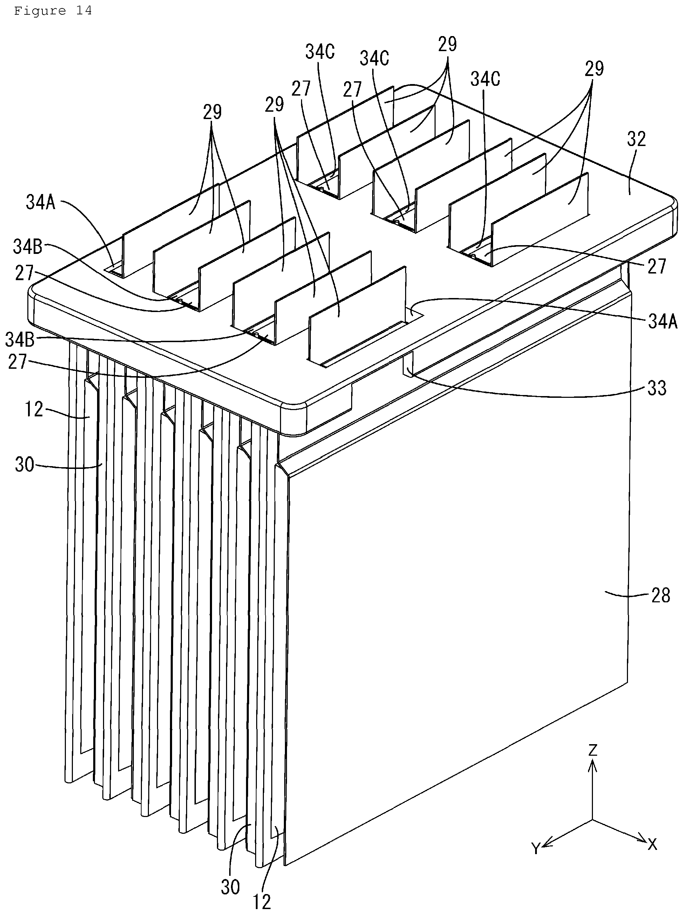

As shown in FIG. 14, the wiring member 32 is attached to a stack of the plurality of electricity storage elements 12, the plurality of absorption sheets 28, and the plurality of separators 30 from above. At this time, the electrode terminals 26 and the contact portions 29 of the absorption sheets 28 are inserted through the slits 36 of the wiring member 32 from below. In this state, the electrode terminals 26 and the contact portions 29 of the absorption sheets 28 project upward from the windows 34A, 34B, and 34C of the wiring member 32.

Next, as shown in FIG. 12, the contact portions 29 of the absorption sheets 28 are bent and placed on the connection portions 27 formed on the electrode terminals 26 from above. Then, the contact portions 29 of the absorption sheets 28 are fixed to the connection portions 27 using a known method such as bonding or heat-welding.

The case 14A is filled with a predetermined amount of the coolant 21. Thereafter, an assembly composed of the electricity storage elements 12 and the wiring member 32 is accommodated in the case 14 from above. Next, the lid portion 15 is placed on the opening edge 18 of the side walls 17 of the case 14 from above, and the lid portion 15 is adhered to the opening edge 18 of the side walls 17 of the case 14 in a liquid-tight manner through laser-welding, for example. As a result, the electricity storage module 10 is completed.

### Operational effects of embodiment

Next, the operational effects of this embodiment will be described. The electricity storage module 10 according to this embodiment includes a housing 11 filled with a coolant 21, a plurality of electricity storage elements 12 that include electrode terminals 26 located above a liquid surface of the coolant 21 and that are accommodated in the housing 11, and an absorption sheet 28 that absorbs the coolant 21 and is in contact with an outer surface of at least one of the plurality of electricity storage elements 12, wherein the electrode terminals 26 include connection portions 27 that electrically connect the electrode terminals 26 of the adjacent electricity storage elements 12 of the plurality of electricity storage elements 12 and that are integral with or separate from the electrode terminals 26, and the absorption sheet 28 includes a contact portion 29 that is in contact with the connection portion 27.

With the above configuration, heat generated in the electricity storage elements 12 that are in contact with the absorption sheet 28 is transferred to the coolant 21 absorbed by the absorption sheet 28, and the coolant 21 is evaporated due to this heat. As a result, heat generated in the electricity storage elements 12 is absorbed as evaporation heat of the coolant 21. Moreover, heat generated in the connection portions 27 is transferred to the coolant 21 that has reached the contact portion 29 of the absorption sheet 28, and the coolant 21 is evaporated due to this heat. As a result, heat generated in the connection portions 27 is absorbed as evaporation heat of the coolant 21.

An electric current that flows through the electricity storage elements 12 flows through the connection portions 27 where the electrode terminals 26 are connected to each other. The connection portions 27 have cross sections that are smaller than those of the electricity storage elements 12. Therefore, since electric resistance of the connection portions 27 is larger than that of the electricity storage elements 12, heat is relatively likely to be generated, and temperature is likely to rise locally. In this embodiment, the contact portions 29 are configured to come into contact with the connection portions 27. Therefore, the contact portions 29 can be reliably cooled by the coolant 21 absorbed up to the contact portions 29. As a result, a local increase in temperature of the connection portions 27 can be suppressed.

With this embodiment, each contact portion 29 is in contact with a connection portion 27 from a side opposite to the electricity storage elements 12. As a result, in this embodiment, the contact portion 29 is configured to be placed on the connection portion 27 from above. On the other hand, the electricity storage elements 12 are arranged at positions below the connection portions 27. With such a configuration, when the contact portion 29 is brought into contact with the connection portion 27, interference between the electricity storage elements 12 and the contact portion 29 can be prevented. As a result, a step of bringing the contact portion 29 into contact with the connection portion 27 can be simplified. In this embodiment, the contact portion 29 can be brought into contact with the connection portion 27 through a simple step of bending the contact portion 29.

With this embodiment, the housing 11 includes a case 14 provided with an opening 13 that opens upward, and a lid portion 15 that has a shape following an opening edge 18 of the opening 13 of the case 14 and that closes the opening 13, and the lid portion 15 includes heat dissipation fins 22 projecting outward from the housing 11, and heat absorption fins 22 projecting inward into the housing 11.

After the coolant 21 absorbs heat generated in the electricity storage elements 12 and the connection portions 27 and is thus evaporated, the coolant 21 rises inside the housing 11 and is in contact with the heat absorption fins 23 that are formed on the lower side of the lid portion 15. Then, heat is transferred from the vapor of the coolant 21 to the heat absorption fins 23. As a result, the coolant 21 is condensed from a gaseous form into a liquid form, and drips downward due to gravity. On the other hand, heat transferred to the heat absorption fins 23 is transmitted to the heat dissipation fins 22, and then dissipated from the heat dissipation fins 22 to the outside. Accordingly, heat absorbed by the coolant 21 is efficiently dissipated to the outside of the housing 11, and therefore, a local increase in temperatures of the electricity storage elements 12 is further suppressed.

With this embodiment, the heat absorption fins 23 are arranged above the connection portions 27. Accordingly, when the vapor of the coolant 21 comes into contact with the heat absorption fins 23, heat of the vapor of the coolant 21 is transferred to the heat absorption fins 23. Then, the coolant 21 is condensed into a liquid form. The devolatilized coolant 21 falls downward from the cooling fins due to gravity. With this embodiment, the cooling fins are arranged above the connection portions 27, and therefore, the coolant 21 that has fallen from the cooling fins reliably flows down on the connection portions 27. As a result, the devolatilized coolant 21 first cools the connection portions 27, and therefore, a local increase in temperatures of the connection portions 27 is further suppressed.

### Other embodiments

The present invention is not limited to the embodiment that has been described above with reference to the drawings, and embodiments such as those described below are also included in the technical scope of the present invention, for example.
(1) Although the electricity storage element 12 in which the electricity storage constituent is sandwiched between the pair of laminated sheets 24 is used in this embodiment, there is no limitation thereto. A configuration may also be applied in which an electricity storage constituent is accommodated in the housing 11 having any shape such as a cylindrical tube shape, a polygonal tube shape, or a coin shape.
(2) Although the configuration in which the electrode terminal 26 is made of a metal foil is applied in this embodiment, there is no limitation thereto. The electrode terminal 26 can be formed in any shape such as a stud bolt shape or a base shape as necessary.
(3) Although the pitch between the heat dissipation fins 22 and the pitch between the heat absorption fins 23 are set to the same value in this embodiment, there is no limitation thereto. The pitch between the heat dissipation fins 22 and the pitch between the heat absorption fins 23 may also be set to different values.
(4) Although the configuration in which the lid portion 15 includes both of the dissipation fins 22 and the heat absorption fins 23 is applied in this embodiment, there is no limitation thereto. A configuration in which the lid portion 15 is provided with no heat dissipation fins 22 may also be applied, and a configuration in which the lid portion 15 is provided with no heat absorption fins 23 may also be applied.
(5) Although the configuration in which the plurality of electricity storage elements 12 are connected in series in this embodiment, there is no limitation thereto. The plurality of electricity storage elements 12 may also be connected in parallel.
(6) Although the configuration in which the absorption sheets 28 come into contact with both of the left and right surfaces of the electricity storage element 12, there is no limitation thereto. A configuration in which the absorption sheet 28 is in contact with one of the left and right lateral surfaces of the electricity storage element 12 may also be applied. When the housing 11 of the electricity storage elements 12 has a polygonal tube shape, for example, a configuration in which the absorption sheet 28 is in contact with any surface of the housing 11 may also be applied.

### List of Reference Numerals

- 10:: Electricity storage module
- 11:: Housing
- 12:: Electricity storage element
- 13:: Opening
- 14:: Case
- 15:: Lid portion
- 18:: Opening edge
- 21:: Coolant
- 22:: Heat dissipation fin
- 23:: Heat absorption fin
- 26:: Electrode terminal
- 27:: Connection portion
- 28:: Absorption sheet
- 29:: Contact portion

## Claims

1. An electricity storage module (10) comprising:
a housing (11) filled with a coolant (21);
a plurality of electricity storage elements (12) that include electrode terminals (26) located above a liquid surface of the coolant (21) and that are accommodated in the housing (11); and
a plurality of absorption sheets (28) that absorb the coolant (21) and are in contact with an outer surface of at least one of the plurality of electricity storage elements (12),
wherein the electrode terminals (26) include a connection portion (27) that electrically connects the electrode terminals (26) of the adjacent electricity storage elements (12) of the plurality of electricity storage elements (12) and that is integral with or separate from the electrode terminal (26), and
each of the plurality of absorption sheets (28) comprises a contact portion (29) that is in contact with the connection portion (27); **characterized in that**
the contact portion (29) protrudes upward at least one end in a front-rear direction of an upper end edge of the absorption sheet (28), and
the contact portions (29) are bent and placed one on top of the other and arranged on the connection portion (27).

2. The electricity storage module according to claim 1, wherein the contact portion (29) is in contact with the connection portion (29) from a side opposite to the electricity storage elements (12).

3. The electricity storage module according to claim 1 or 2,
wherein the housing (11) includes a case (14) provided with an opening (13) that opens upward, and a lid portion (15) that has a shape following an opening edge of the opening of the case (14) and that closes the opening (13), and
the lid portion (15) includes a heat dissipation fin (22) projecting outward from the housing (11), and a heat absorption fin (23) projecting inward into the housing (11).

4. The electricity storage module according to claim 3, wherein the heat absorption fin (23) is arranged above the connection portions (27).

5. A coolant absorption sheet (28) that intended to be on at least one of left and right lateral surfaces of a electricity storage element (12) and intended to be contact with an outer surface of the electricity storage element (12); comprising:
a contact portion (29) protruding upward at least one end in a front-rear direction of an upper end edge of the absorption sheet (28), being bent and placed one on top of the other and intended to be on a connection portion (27); the connection portion (27) electrically connecting electrode terminals (26) of adjacent electricity storage elements (12) of a plurality of electricity storage elements (12) and being integral with or separate from the electrode terminal (26).

## Patentansprüche

1. Elektrizitätsspeichermodul (10), umfassend:
ein Gehäuse (11), das mit einem Kühlmittel (21) gefüllt ist;
eine Mehrzahl von Elektrizitätsspeicherelementen (12), die Elektrodenanschlüsse (26) enthalten, die sich über einer Flüssigkeitsfläche bzw. -oberfläche des Kühlmittels (21) befinden und die in dem Gehäuse (11) untergebracht sind; und
eine Mehrzahl von Absorptionsfolien bzw. -schichten (28), die das Kühlmittel (21) absorbieren und mit einer Außenfläche bzw. -oberfläche von zumindest einem der Mehrzahl von Elektrizitätsspeicherelementen (12) in Kontakt sind;
wobei die Elektrodenanschlüsse (26) einen Verbindungsabschnitt (27) enthalten, der die Elektrodenanschlüsse (26) der benachbarten bzw. angrenzenden Elektrizitätsspeicherelemente (12) der Mehrzahl von Elektrizitätsspeicherelementen (12) elektrisch verbindet und der mit dem Elektrodenanschluss (26) integral oder von diesem separat ist; und
wobei jede der Mehrzahl von Absorptionsfolien bzw. -schichten (28) einen Kontaktabschnitt (29) umfasst, der mit dem Verbindungsabschnitt (27) in Kontakt ist; **dadurch gekennzeichnet, dass**
der Kontaktabschnitt (29) zumindest ein Ende in einer Vorne-Hinten-Richtung einer oberen Endkante der Absorptionsfolie bzw. -schicht (28) nach oben ragt, und
die Kontaktabschnitte (29) gebogen und übereinander platziert sind und an dem Verbindungsabschnitt (27) angeordnet sind.

2. Elektrizitätsspeichermodul nach Anspruch 1, wobei der Kontaktabschnitt (29) mit dem Verbindungsabschnitt (29) von einer Seite gegenüberliegend bzw. entgegengesetzt zu den Elektrizitätsspeicherelementen (12) in Kontakt ist.

3. Elektrizitätsspeichermodul nach Anspruch 1 oder 2, wobei das Gehäuse (11) einen Kasten (14), der mit einer Öffnung (13) versehen ist, die sich nach oben öffnet, und einen Deckelabschnitt (15) enthält, der eine Form aufweist, die einer Öffnungskante der Öffnung des Kastens (14) folgt, und der die Öffnung (13) verschließt, und
wobei der Deckelabschnitt (15) eine Wärmeableitungsrippe (22), die aus dem Gehäuse (11) nach außen ragt, und eine Wärmeabsorptionsrippe (23) enthält, die in das Gehäuse (11) hineinragt.

4. Elektrizitätsspeichermodul nach Anspruch 3, wobei die Wärmeabsorptionsrippe (23) über den Verbindungsabschnitten (27) angeordnet ist.

5. Kühlmittelabsorptionsfolie bzw. -schicht (28), die sich auf zumindest einer von linken und rechten Seitenflächen bzw. -oberflächen eines Elektrizitätsspeicherelements (12) befinden soll und mit einer Außenfläche bzw. -oberfläche des Elektrizitätsspeicherelements (12) in Kontakt sein soll; umfassend:
einen Kontaktabschnitt (29), der zumindest ein Ende in einer Vorne-Hinten-Richtung einer oberen Endkante der Absorptionsfolie bzw. -schicht (28) nach oben ragt, gebogen und übereinander platziert ist und an einem Verbindungsabschnitt (27) sein soll; wobei der Verbindungsabschnitt (27) Elektrodenanschlüsse (26) benachbarter bzw. angrenzender Elektrizitätsspeicherelemente (12) einer Mehrzahl von Elektrizitätsspeicherelementen (12) elektrisch verbindet und integral mit dem Elektrodenanschluss (26) oder von diesem separat ist.

## Revendications

1. Module de stockage d'électricité (10) comprenant :
un logement (11) rempli d'un réfrigérant (21) ;
une pluralité d'éléments de stockage d'électricité (12) qui comportent des bornes d'électrode (26) situées au-dessus d'une surface de liquide du réfrigérant (21) et qui sont reçus dans le logement (11) ; et
une pluralité de feuilles d'absorption (28) qui absorbent le réfrigérant (21) et sont en contact avec une surface externe d'au moins l'un de la pluralité d'éléments de stockage d'électricité (12),
dans lequel les bornes d'électrode (26) comportent une partie de raccordement (27) qui relie électriquement les bornes d'électrode (26) des éléments de stockage d'électricité adjacents (12) de la pluralité d'éléments de stockage d'électricité (12) et qui est formée de manière unitaire avec la borne d'électrode (26) ou séparée de cette dernière, et
chacune de la pluralité de feuilles d'absorption (28) comprend une partie de contact (29) qui est en contact avec la partie de raccordement (27) ; **caractérisé en ce que**
la partie de contact (29) étend vers le haut au moins une première extrémité dans une direction longitudinale d'un bord d'extrémité supérieur de la feuille d'absorption (28), et
les parties de contact (29) sont repliées et placées l'une sur l'autre et agencées sur la partie de raccordement (27).

2. Module de stockage d'électricité selon la revendication 1, dans lequel la partie de contact (29) est en contact avec la partie de raccordement (29) à partir d'un côté opposé des éléments de stockage d'électricité (12).

3. Module de stockage d'électricité selon la revendication 1 ou 2,
dans lequel le logement (11) comporte un boîtier (14) comportant une ouverture (13) qui débouche vers le haut, et une partie de couvercle (15) qui présente une forme se conformant à un bord d'ouverture de l'ouverture du boîtier (14) et qui obture l'ouverture (13), et
la partie de couvercle (15) comporte une ailette de dissipation thermique (22) s'étendant vers l'extérieur par rapport au logement (11) et une ailette de dissipation thermique (23) s'étendant vers l'intérieur du logement (11).

4. Module de stockage d'électricité selon la revendication 3, dans lequel l'ailette de dissipation thermique (23) est agencée au-dessus des parties de raccordement (27).

5. Feuille d'absorption de réfrigérant (28) qui est destinée à être formée sur au moins l'une de surfaces latérales gauche et droite d'un élément de stockage d'électricité (12) et destinée à venir en contact avec une surface externe de l'élément de stockage d'électricité (12) ; comprenant :
une partie de contact (29) étendant vers le haut au moins une première extrémité dans une direction longitudinale d'un bord d'extrémité supérieur de la feuille d'absorption (28), qui est repliée et empilée et destinée à être placée sur une partie de raccordement (27) ; la partie de raccordement (27) raccordant électriquement les bornes d'électrode (26) d'éléments de stockage d'électricité adjacents (12) d'une pluralité d'éléments de stockage d'électricité (12) et étant formée de manière unitaire avec la borne d'électrode (26) ou séparée de cette dernière.
